# EUROPEAN PATENT APPLICATION

(11) **EP 2 600 638 A1**
(43) Date of publication of application: **05.06.2013**
(21) Application number: 10855406.4
(22) Date of filing: 28.10.2010
(51) Int. Cl.: H04W 4/00

(54) **METHOD FOR DELIVERING AND DISPLAYING CONTENT ON A MOBILE DEVICE**

(30) Priority: 30.07.2010 RU 2010132123
(71) Applicant: Obshchestvo S Ogranichennoy Otvetstvennostyu "Tsentr Mobilnoy Reklamy", Moscow 127473 (RU)
(72) Inventor: DROZDOV, Nikita Mikhailovich, Moscow 115516 (RU); PETUKHOV, Anton Valeryevich, Moscow 117461 (RU)
(74) Representative: Penny, Daryl
(86) International application number: PCT/RU2010/000631
(87) International publication number: WO 2012/015329

(57) **Abstract**

The invention relates to the content distribution, in particular promotional messages and images via the original program for mobile devices, like mobile phones. The technical result to which the present invention is aimed is creation of such a method of content distribution wherein probability of familiarization of a user with the content is increased, maintaining convenience of use of a mobile device. The abovementioned technical result is achieved in the following way. The method of mobile content delivery and display includes installation on the mobile device of an original external program, required for reception, processing and display of promotional and informational messages using a method, including but not limited to: sending of an SMS or USSD-message to the short number with subsequent reception of a reply SMS containing a hyperlink to a program downloading resource, bulk SMS, containing a hyperlink to a program downloading resource or manual installation of a program from a website containing the necessary content, determination of suitable content for every certain mobile device, delivery of at least one content unit from or on behalf of a content provider, storing of content in mobile device memory during the period of transfer of the device to the low power mode, display of content from the mobile device memory on the mobile device screen over user interface with the possibility of its visual perception when mobile device screen lighting is activated, deletion of current content from mobile device screen under the certain external influence of the user on the device.

## Description

The invention relates to the content distribution, in particular promotional messages and images via the original program for mobile devices, like mobile phones.

A method of distribution of personal promotional and informational messages to users is known, based on the principle that the distributor's original program is downloaded to the mobile phone of a user for reception of promotional and informational messages; before sending a promotional and informational messages to a user a determination of user's area of interest shall be carried out and user's consent shall be obtained, and promotional and informational messages are displayed on the mobile telephone screen (patent RF 2346413, H04W4.12, 2006).

The disadvantages of the known method are limited capacities of broadcasting of amount of advertising campaigns required by advertisers, as systematic contact with promotional and informational message on the screen of mobile device is not possible until the occurrence of a random event, which is reception of incoming call or incoming SMS/MMS, only at the moment of which this promotional and informational message is displayed on the mobile device screen, and also a small duration of a contact (familiarization) with content during incoming call before accepting the call, having an adverse effect on the effectiveness of promotional message.

A technical result to which the present invention is aimed is a creation of such a method of content distribution wherein the probability of familiarization of a user with the content is increased, maintaining the convenience of use of a mobile device.

The abovementioned technical result is achieved in the following way.

The method of mobile content delivery and display includes installation on the mobile device of an original external program, required for reception, processing and display of promotional and informational messages using a method, including but not limited to: sending an SMS or USSD-message to the short number with subsequent reception of reply SMS containing a hyperlink to a program downloading resource, bulk SMS, containing a hyperlink to a program downloading resource or manual installation of a program from a website containing a necessary content, determination of suitable content for every certain mobile device, delivery of at least one content unit from or on behalf of a content provider, storing of content in mobile device memory during the period of transfer of device to low power mode, display from a mobile device memory on the screen of mobile device over user interface with the possibility of its visual perception when mobile device screen lighting is activated, deletion of current content from mobile device screen under the certain external influence of the user on the device.

The external influence of the user on the device may be performed by way of action on mobile device function keys and/or area of graphic interface of the screen with active matrix specially assigned for management of the present type of content.

At the same time during the presence of content on the device screen functions "accept the call" and "emergency service call" are active; other functions of mobile device are disabled.

As a rule, content is displayed on the screen of a mobile device over the user interface with the capability of access of a user to management of functions "accept the call" and "emergency service call", the rest of the functions of a mobile device are unavailable. In case of receipt of incoming call at the moment when content is on the mobile device screen, the caller line identification presentation (CLIP) function is displayed over the content.

After interaction of the user with the current content and its deletion from the area of the mobile screen device the standard mobile device control functions will be again available for use according to its intended purpose.

When more than one content unit is loaded to the device memory, the display of the next content unit on the mobile device screen is performed periodically following a predefined sequence. In addition, the displayed content is changed according to a predefined rotation algorithm.

Cell phone, pocket personal computer (PPC), mobile portable GPS device or any combination thereof may be used as a mobile device.

The content may be represented by a message in the form of advertisement, a movie, a song, a ringtone, a screen saver; a game, video information, audio information, video/audio information, graphics messages, text messages, digital messages, software applications, multimedia, social advertisement, surveys, reviews, weather information and any combination thereof.

Content for every certain mobile device may be determined upon the results of user questioning.

In this case the determination of the suitable content for every certain mobile device is carried out on the basis of user's parameters including psychographics, a lifestyle, buying activity, characteristics of mobile portable device, user expressed preferences, user searches results or any combination whereof.

The method provides the mobile device user a possibility to perform actions related to the content, these are: connection by phone call to the object related to the content, or to object able to receive the content, and/or sending a content to any object, and/or establishing communication with a website related to the content, and/or reception of the downloaded file on the basis of the information contained in the content, and/or establishing communication with an object related to the content, and/or establishing communication with the application related to the content or may be received by the content. Also the method ensures collection of data related to user's actions related to the content, estimation of content by a user receiving the content of portable mobile device.

In this case a user may be charged a bonus and/or paid a reward with the possibility of its conversion to the equivalent payment for communication services or any other forms of payment for goods, and/or services, and/or their equivalents.

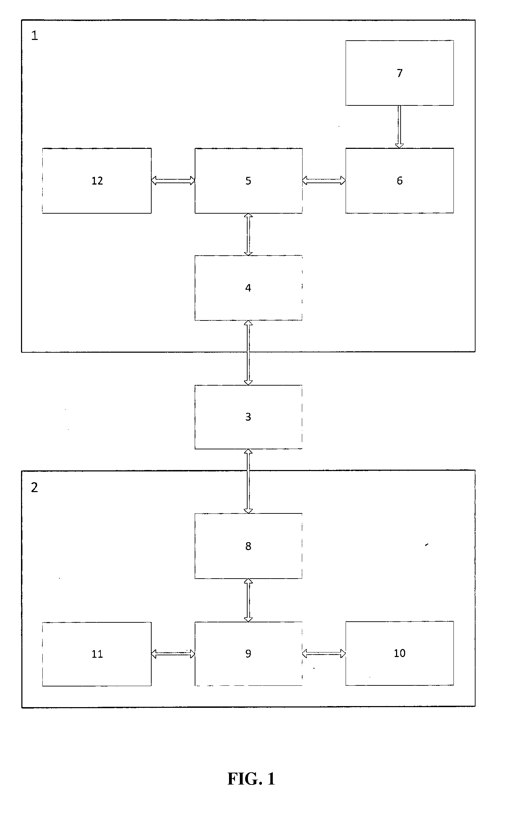

The method is illustrated by the diagram (fig. 1), where:
1 - North end of the system
2 - Mobile device
3 - Mobile communication services provider network
4 - North end data transfer process management device
5 - Content management device
6 - North end data storage device
7 - Content formation device
8 - Mobile device data transfer process management device
9 - Content display management device
10 - Mobile device data storage device
11 - Interface device
12 - Payments block

A method of mobile content delivery and display is implemented in the following way.

A mobile device user visiting a program downloading website using the link is forwarded to north end (1) data transfer process management device (4) which transmits to the user's mobile device (2) a program implementing a content display, views accounting and content interaction accounting (like a click-through or a call) algorithms assigned by content providers and generation of service messages forwarded to the content management device (5). The initial start of the program is identified as a system log request, while the identification of the user is carried out upon his selective number (CTN). During registration and probably during further cases of interaction with promotional content the user is forwarded an interactive application form containing questions, for example concerning the user's personal cues (sex, age, marital status, affluence level etc.) Answers to which will allow sending user only such content which may catch his interest. The user receiving the access to the questions of interactive application form with the help of his/her mobile device forms answers to questions posed in the application form and forwards them through the data transfer process management devices (8) to the system where the present message is identified as answers to the questions of the application form and is transferred to the data storage device (6). When this happens, it is registered in the data storage device (6) that the registration of the user in the system occurred successfully which means that the consent of the user to receive the content. The content having classification features (for example for women only, for single users only, only for users with certain phone make etc.) And display conditions (amount of views, display duration time etc.) Enters the data storage device (6) from the content formation device (7). In the content management device (5) classification features of these messages are compared to those of users and on the basis of comparison results (features shall match) and taking into account the display conditions, content blocks are formed for every user personally and basing on the request received from the mobile device (2), and sent to the mobile device (2) through mobile communication services provider network (3).

The mobile device (2) carries out reception of content, records it on the data storage device (10) and registers the fact of message reception and parameters characterizing the conditions for provision of content in the content display management device (9). At the onset of the event determined by the system as the signal for initiation of content display which, in accordance with display conditions set by the advertiser, shall be provided to the user, the interface device (11) displays the specified content on the mobile device screen. Content must stay on the mobile device screen until the moment of pressing of an assigned key on the mobile device which is intended for interaction with the content (for example, "close", "go to the link" or "call"), and/or influence on the screen area with an active matrix intended for interaction with the content. The content display management device (9) registers the fact of interaction between the user and content and records corresponding information on the data storage device (10). At the specified time set by data transfer process management devices (4 and 8) (for example, with account of occupancy of a mobile service provider network), the content display management device (9) generates a message which consists of an indication of amount of relevant content views and amount of interactions with content, and transfers it to the data transfer process management device (8) for the purpose of transfer to the system.

The said message is identified in the system as information on amount of views and interactions, and is transferred to content management device (5) for corresponding processing and to the data storage device (6) for recording. According to the results of calculations of amount of views, amount and types of interactions with content in the content management device (5), the data is generated, on the basis whereof charging of a bonus to a user of a mobile device and settlements with advertisers are provided.

The best option for implementation of the claimed method and system but not the only possible one is presented above.

## Claims

1. The method of mobile content delivery and display, including installation of an external program, determination of suitable content for every certain mobile device, delivery of at least one content unit from or on behalf of a content provider, storing of content in mobile device memory, during the period of transfer of the device to the low power mode, display of content on the mobile device screen over user interface with the possibility of its visual perception when mobile device screen lighting is activated, deletion of current content from mobile device screen under the certain external influence of the user on the device.

2. The method of claim 1, wherein external influence of the user on the device is carried out by way of action on mobile device function keys and/or areas of the graphic interface of the screen with the active matrix which are specifically assigned for management of such type of content.

3. The method of claim 1, wherein "accept the call" and "emergency service call" functions are in the working mode and other mobile device functions are disabled during the period of content display on the device screen.

4. The method of claim 1, wherein the content is displayed on the mobile device screen over the user interface with the possibility of access of the user to management of "accept the call" and "emergency service call" functions, while other mobile device functions for management are unavailable.

5. The method of claim 1, wherein in case of downloading of more than one content unit to the memory, display of the corresponding content unit on the mobile device screen is performed periodically following a predefined sequence.

6. The method of claim 1, wherein displayed content is changed in accordance with the predefined rotation algorithm.

7. The method of claim 1, wherein a cell phone, a pocket personal computer (ppc), a mobile portable GPS device or any combinations thereof are used as the mobile device.

8. The method of claim 1, wherein content represents a message in the form of an advertisement, a movie, a song, a ringtone, a screen saver, a game, video information, audio information, video/audio information, graphic messages, text messages, digital messages, software applications, multimedia, social advertisement, surveys, reviews, weather information and any combination thereof.

9. The method of claim 1, wherein content of every certain mobile device is determined according to the results of user questioning.

10. The method of claim 1, wherein determination of appropriate content for every certain mobile device is defined on the basis of user parameters, including psychographics, a lifestyle, user's buying activity, characteristics of mobile portable device, user expressed preferences, user searches results or any combination whereof.

11. The method of claim 1, comprising the possibility of performance of actions connected with content by the mobile device user: connection by phone call to the object related to the content, or to object able to receive the content, and/or sending a content to any object, and/or establishing communication with a website related to the content, and/or reception of the downloaded file on the basis of the information contained in the content, and/or establishing communication with an object related to the content, and/or establishing communication with the application related to the content or may be received by the content.

12. The method of claim 1, comprising collection of data related to user's actions related to the content, estimation of content by a user receiving the content of portable mobile device.

13. The method of claim 12, wherein a bonus can be charged and/or paid to the user, with the possibility of its conversion into the equivalent payment for communication services or other forms of payment for goods and/or services, and/or their equivalents.
